(19) Europäisches Patentamt
European Patent Office
Office européen des brevets

(11) **EP 4 267 918 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **21830389.9**

(22) Anmeldetag: **26.11.2021**

(51) Internationale Patentklassifikation (IPC):
**G01F 1/84** *(2006.01)* **G01F 25/10** *(2022.01)*

(52) Gemeinsame Patentklassifikation (CPC):
**G01F 1/8436; G01F 25/10**

(86) Internationale Anmeldenummer:
**PCT/EP2021/083169**

(87) Internationale Veröffentlichungsnummer:
**WO 2022/135830 (30.06.2022 Gazette 2022/26)**

(54) **CORIOLIS-MASSEDURCHFLUSSMESSGERÄT UND VERFAHREN ZUM BESTIMMEN VON EINFLUSSGRÖSSEN AUF DESSEN TOTALEN NULLPUNKTFEHLER, VERFAHREN ZUM ERMITTELN DES TOTALEN NULLPUNKTFEHLERS UND BETRIEBSVERFAHREN DAFÜR**

CORIOLIS MASS FLOW METER AND METHOD FOR DETERMINING VARIABLES INFLUENCING THE TOTAL ZERO POINT ERROR OF THE METER, METHOD FOR DETERMINING THE TOTAL ZERO POINT ERROR AND OPERATING METHOD FOR SAME

DÉBITMÈTRE MASSIQUE CORIOLIS ET PROCÉDÉ DE DÉTERMINATION DE VARIABLES INFLUANT SUR L'ERREUR DE POINT ZÉRO TOTAL DU DÉBITMÈTRE, PROCÉDÉ DE DÉTERMINATION DE L'ERREUR DE POINT ZÉRO TOTAL ET PROCÉDÉ DE FONCTIONNEMENT ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2020 DE 102020134707**

(43) Veröffentlichungstag der Anmeldung:
**01.11.2023 Patentblatt 2023/44**

(73) Patentinhaber: **Endress + Hauser Flowtec AG 4153 Reinach (CH)**

(72) Erfinder:
• **ZHU, Hao 85354 Freising (DE)**

• **BITTO, Ennio 4147 Aesch (CH)**

(74) Vertreter: **Hahn, Christian Endress+Hauser Group Services (Deutschland)AG +Co. KG Colmarer Straße 6 79576 Weil am Rhein (DE)**

(56) Entgegenhaltungen:
EP-A1- 2 019 295          EP-A2- 2 088 403
WO-A1-2011/009683         WO-A1-2020/036586
WO-A1-98/31990            WO-A2-2019/086188
DE-A1- 102017 125 273     US-A- 5 796 012
US-A- 5 907 104           US-A1- 2005 119 845
US-A1- 2020 278 231

EP 4 267 918 B1

**Beschreibung**

Die vorliegende Erfindung betrifft ein Coriolis-Massedurchflussmessgerät und ein Verfahren zum Bestimmen von Einflussgrößen auf dessen totalen Nullpunktfehler, ein Verfahren zum Ermitteln des totalen Nullpunktfehlers, und ein Betriebsverfahren dafür.

Messrohre von Coriolis-Massedurchflussmessgeräten erfahren durch einen Erreger eine Anregung einer Biegeschwingungsmode, wobei die Anregung idealisiert in der Symmetrie der Biegeschwingungsmode erfolgt, wobei ein Massestrom durch die Messrohre eine Überlagerung der nächst höheren antisymmetrischen Biegeschwingungsmode bewirkt wird. Dies bewirkt eine Phasenverschiebung zwischen einlassseitigen und auslassseitigen Abschnitten der schwingenden Messrohre, deren Vermessung die Bestimmung des Massedurchfluss ermöglicht.

Die internationale Veröffentlichung WO 98/31990 A1 offenbart ein Coriolis-Massedurchflussmessgerät mit einer Überwachung einer Antwortcharakteristik im Einsatz. Die Veröffentlichung US 2005 / 0119845 A1 offenbart ein Durchflussmessgerät mit parameterabhängig gewählten Nullpunktwerten. Die Veröffentlichung DE 10 2017 125 273 A1 beschreibt ein Coriolis Massedurchflussmessgrät mit zwei Oszillatoren, unterschiedlicher Frequenz, die jeweils durch ein Messrohrpaargebildet sind. Überlagerung von Signalen, der beiden Oszillatoren, können wechselseitig Nullpunktfehlerbeiträge hervorrufen, die nach der Lehre der DE 10 2017 125 273 A1 minimiert werden. Das Patent US 5,796,012 A1 adressiert Nullpunktfehler in Abhängigkeit von thermischen Spannungen und Dichteschwankungen. Die europäische Veröffentlichung EP 2 019 295 A1 offenbart eine Nullpunktkorrektur bei einem Coriolis-Massedurchflussmessgerät in Abhängigkeit von einer mechanischen Spannung in einem Koppler zwischen einem Messrohrpaar.

Bei realen Messrohren kann die Anregung aufgrund von Fertigungstoleranzen von der Symmetrie der Schwingungsmode abweichen, so dass durch die Anregung auch eine anteilige Anregung der nächst höheren antisymmetrischen Schwingungsmode erfolgt, die einen erregerabhängigen Nullpunktfehler bei der Durchflussmessung bewirkt. Weiterhin können Asymmetrien aufgrund von aufgrund von Fertigungstoleranzen auch bei anderen Komponenten als dem Erreger auftreten. Diese Asymmetrien bewirken einen erregerunabhängigen Nullpunktfehler. Der totale Nullpunktfehler ergibt sich als Summe der beiden zuvor genannten Fehlerbeiträge, wobei zudem eine Abhängigkeit von einer Dämpfung der Biegeschwingungsmode festzustellen ist. Es ist daher die Aufgabe der vorliegenden Erfindung Verfahren bereitzustellen, die eine genaue Bestimmung des Nullpunktfehlers ermöglichen, und ein dazu fähiges Coriolis-Massedurchflussmessgerät bereitzustellen.

Die Aufgabe wird erfindungsgemäß gelöst durch die Verfahren gemäß der unabhängigen Ansprüche 1 und 10 sowie das Coriolis-Massedurchflussmessgerät nach dem unabhängigen Anspruch 12.

Das erste erfindungsgemäße Verfahren dient zum Bestimmen von Einflussgrößen auf einen Nullpunktfehler eines Coriolis-Massedurchflussmessgerätes mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei das Verfahren umfasst: Anregen einer Schwingung einer Biegeschwingungsmode des Messrohrs; Ermitteln eines totalen Nullpunktfehlers mit einem ersten Medium im Messrohr bei einem Durchfluss von Null; Ermitteln eines Dämpfungswerts der Schwingung der Biegeschwingungsmode mit einem ersten Medium im Messrohr; Ermitteln eines erregerunabhängigen Nullpunktfehlers bei einer abklingenden Schwingung Biegeschwingungsmode mit dem ersten Medium im Messrohr bei einem Durchfluss von Null; Ermitteln eines erregerabhängigen Beitrags zum totalen Nullpunktfehler anhand des totalen Nullpunktfehlers und anhand des erregerunabhängigen Nullpunktfehlers; und Ermitteln eines Empfindlichkeitsfaktors für die Biegeschwingungsmode, anhand des erregerabhängigen Beitrags zum totalen Nullpunktfehler und anhand des Dämpfungswerts.

Der Empfindlichkeitsfaktor ist im Wesentlichen abhängig vom Grad des Symmetriebruchs durch den Erreger, insbesondere aufgrund von Fertigungstoleranzen. Wenn die Position des Erregers bezüglich des Messrohrs festgelegt ist, kann sich an dem Empfindlichkeitsfaktor praktisch nichts mehr ändern. Ein einmal ermittelter Empfindlichkeitswert kann daher abgespeichert und so lange zur Bestimmung des erregerabhängigen Nullpunktfehlers verwendet werden, solange die Symmetrieabweichung zwischen Messrohr und Erreger unverändert ist. Davon kann bei Coriolis-Massedurchflussmessgeräten bei bestimmungsgemäßem Einsatz für die gesamte Lebensdauer des Gerätes ausgegangen werden, bei denen die Messrohre unlösbar mit den Erregern verbunden sind.

In einer Weiterbildung der Erfindung umfasst das das Ermitteln des Dämpfungswerts das Bilden eines Quotienten aus einem Erregerstrom zum Anregen der Schwingung und der damit erzielten Schwingungsamplitude.

In einer Weiterbildung der Erfindung umfasst das Ermitteln des Dämpfungswerts das Ermitteln einer Zeitkonstanten der abklingenden Schwingung der Biegeschwingungsmode.

In einer Weiterbildung der Erfindung umfasst das Ermitteln eines erregerabhängigen Beitrags zum totalen Nullpunktfehler das Bilden einer Differenz zwischen dem totalen Nullpunktfehler und dem erregerunabhängigen Nullpunktfehler.

In einer Weiterbildung der Erfindung umfasst das Ermitteln des Empfindlichkeitsfaktors eine Division des erregerabhängigen Beitrags zum totalen Nullpunktfehler durch den Dämpfungswert.

In einer Weiterbildung der Erfindung umfasst das Verfahren weiterhin das Ermitteln eines aktualisierten erregerunabhängigen Nullpunktfehlers, umfassend: Anregen einer Schwingung einer Biegeschwingungsmode mit einem zweiten Medium im Messrohr; Messen eines zweiten totalen Nullpunktfehlers mit dem zweiten Medium im Messrohr bei einem Durchfluss von Null; Ermitteln eines zweiten Dämpfungswerts mit dem zweiten Medium im Messrohr; und Ermitteln des aktualisierten erregerunabhängigen Nullpunktfehlers auf Basis des zweiten totalen Nullpunktfehlers, des zweiten Dämpfungswerts und des Empfindlichkeitsfaktors.

Gemäß einer Weiterbildung der Erfindung erfolgt auf Basis der zuvor bestimmten Einflussgrößen das Bestimmen eines medienabhängigen dritten totalen Nullpunktfehlers des Coriolis Massedurchflussmessgerätes umfassend: Ermitteln eines dritten Dämpfungswerts für eine Schwingung der Biegeschwingungsmode; und Berechnen des dritten totalen Nullpunktfehlers auf Basis des dritten Dämpfungswerts und des Empfindlichkeitsfaktors für die Biegeschwingungsmode und des erregerunabhängigen Nullpunktfehlers.

In einer Weiterbildung der Erfindung umfasst der dritte totale Nullpunktfehler die Summe des erregerunabhängigen Nullpunktfehlers und eines dritten erregerabhängigen Beitrags zum totalen Nullpunktfehler.

In einer Weiterbildung der Erfindung umfasst der erregerabhängige Beitrag zum dritten totalen Nullpunktfehler ein Produkt des Empfindlichkeitsfaktors und des dritten Dämpfungswerts.

Die Erfindung betrifft auch modulare Coriolis-Massedurchflussmessgeräte mit austauschbaren Messrohrbaugruppen. Bei diesen Geräten kann sich die Symmetrieabweichung zwischen Erreger und Messrohr bei jedem Austausch einer Messrohrbaugruppe verändern. Daher wird vorzugsweise nach dem Austausch einer Messrohrbaugruppe ein neuer Empfindlichkeitsfaktor bestimmt, wie im dritten erfindungsgemäßen Verfahren definiert ist.

Das zweite erfindungsgemäße Verfahren dient zum Betreiben eines modularen Coriolis-Massedurchflussmessgeräts mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei das Coriolis-Massedurchflussmessgerät ein Basismodul und ein austauschbares Messrohrmodul aufweist, wobei das Messrohrmodul das Messrohr und jeweils eine erste Komponente des Erregers und der beiden Schwingungssensoren umfasst, wobei das Basismodul die Mess- und Betriebsschaltung, ein Gehäuse mit einer Aufnahme für das Messrohrmodul und jeweils eine zweite Komponente des Erregers und der beiden Schwingungssensoren umfasst, wobei das Verfahren umfasst: Verbinden des Messrohrmoduls mit dem Basismodul, so dass jeweils die ersten und zweiten Komponenten des Erregers und der beiden Sensoren zueinander in einer Wirkposition stehen; und Ermitteln eines Empfindlichkeitsfaktors sowie eines erregerunabhängigen Nullpunktfehlers mit dem ersten Erfindungsgemäßen Verfahren.

In einer Weiterbildung der Erfindung umfasst das Verfahren zum Betreiben des modularen Coriolis Massedurchflussmessgerätes weiterhin das Bestimmen eines totalen Nullpunktfehlers mittels des zweiten erfindungsgemäßen Verfahrens.

Das erfindungsgemäße Coriolis-Massedurchflussmessgerät ist ausgestattet mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei die Mess- und Betriebsschaltung zur Durchführung mindestens eines der erfindungsgemäßen Verfahren eingerichtet ist.

Die Erfindung wird nun anhand der in den Zeichnungen dargestellten Ausführungsbeispielen näher erläutert. Es zeigt:

Fig. 1a: Ein Ausführungsbeispiel eines Basismoduls eines erfindungsgemäßen Coriolis-Massedurchflussmessgerätes;

Fig. 1b: Ein Ausführungsbeispiel einer Messrohrbaugruppe eines erfindungsgemäßen Coriolis-Massedurchflussmessgerätes;

Fig. 1c: Ein Ausführungsbeispiel eines erfindungsgemäßen Coriolis-Massedurchflussmessgerätes; mit den Komponenten aus Fign. 1a und 1b;

Fig. 2a: Exemplarische Messdaten zur Ermittlung des Nullpunktfehlers eines Coriolis-Massedurchflussmessgerätes;

Fig. 2b: Ein Diagramm zu den Beiträgen zum Nullpunktfehler;

Fig. 2c: Ein Diagramm zur Aktualisierung des erregerunabhängigen Nullpunktfehlers;

Fig. 3a: Ein Flussdiagramm zu einem Ausführungsbeispiel zur Ermittlung der Einflussgrößen auf den Nullpunktfehler;

Fig. 3b: Ein Flussdiagramm zu einem Ausführungsbeispiel zur Aktualisierung des erregerunabhängigen Nullpunktfehlers;

Fig. 3c: Ein Flussdiagramm zu einem Ausführungsbeispiel zur Ermittlung des totalen Nullpunktfehlers; und

Fig. 3d: Ein Flussdiagramm zu einem Ausführungsbeispiel zum betrieben eines modularen Coriolis-Massedurchflussmessgerätes.

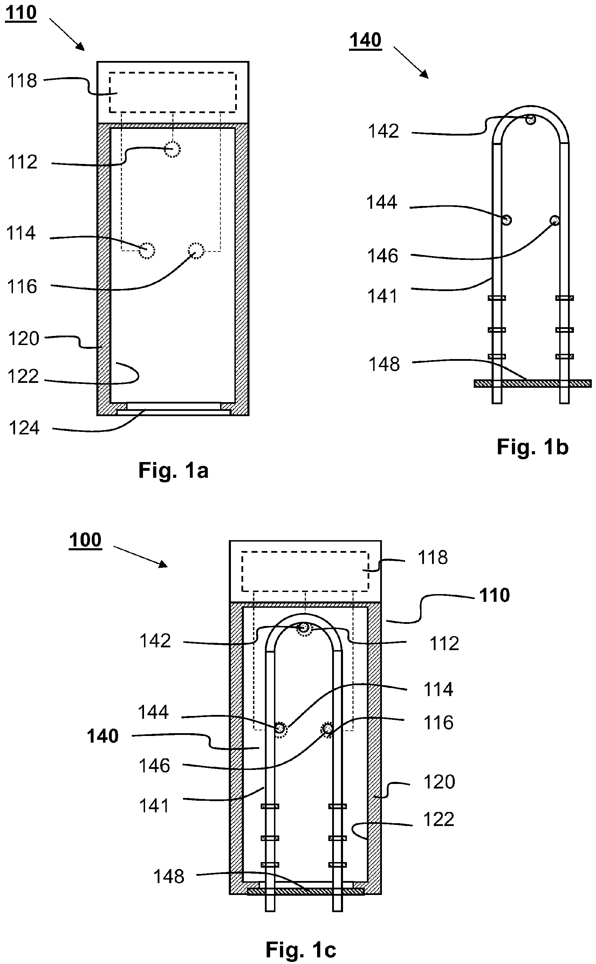

Das in Fign. 1a bis 1c gezeigte Ausführungsbeispiel eines Coriolis-Massedurchflussmessgerätes 100 umfasst ein Basismodul 110 und eine austauschbare Messrohrbaugruppe 140.

Das Basismodul 110 umfasst einen Gehäuse 120, in dem eine Messrohrkammer 122 zur Aufnahme eines Messrohrs 141 der Messrohrbaugruppe 140 ausgebildet ist, wobei die Messrohrkammer 122 eine Öffnung 124 aufweist, durch welche das Messrohr 141 in die Messrohrkammer 144 einbringbar ist. An einer Wand der Messrohrkammer 122 sind eine Erregerspule 112, und zwei Sensorspulen 114, 116 angeordnet. Das Basismodul umfasst weiterhin eine Mess- und Betriebsschaltung 118, an welche die Erregerspule 112, und die Sensorspulen 114, 116 angeschlossen sind.

Die Messrohrbaugruppe 140 umfasst neben dem u-förmigen Messrohr 141 eine Montageplatte 148, mit der das Messrohr 141 starr verbunden, und in am Gehäusekörper 120 fixierbar ist. Weiterhin umfasst die Messrohrbaugruppe 140 einen Erregermagneten 142, und zwei Sensormagneten 144, 146, wobei der Erregermagnet 142 im Scheitel des Bogens des u-förmigen Messrohrs 141 angeordnet ist, und die Sensormagneten 144, 146 symmetrisch dazu einlaufseitig und auslaufseitig in geraden messrohrabschnitten positioniert sind. Im Idealfall fluchtet der Erregermagnet 142 im montierten Zustand der Messrohrbaugruppe 140 perfekt mit der Erregerspule 112, so dass die Anregung einer Biegeschwingung mittels des Erregers, welcher durch die Erregerspule 112 und den Erregermagneten 142 gebildet wird, symmetrisch zu einer Messrohrquerebene verläuft, zu der das Messrohr 141 und Sensoren, welche durch die Sensorspulen und die Sensormagneten gebildet sind, eine Spiegelsymmetrie aufweisen. Aufgrund von Fertigungstoleranzen, kann es jedoch zu leichten Symmetrieabweichungen kommen, die einen Nullpunktfehler bei der Massedurchflussmessung bewirken.

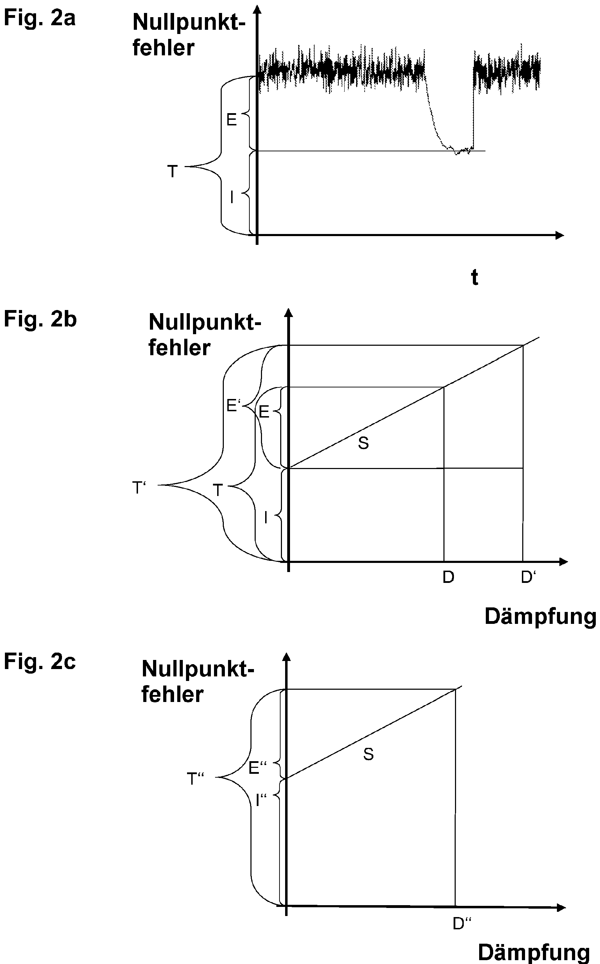

Fig. 2a zeigt exemplarische Messdaten zur Ermittlung des Nullpunktfehlers, wobei hierzu bei einer Massedurchflussrate von Null eine Massedurchflussratenmessung durchgeführt wird, und zwar einmal bei aktivem Erreger zum Aufrechterhalten einer Schwingung in der Biegeschwingungsnutzmode zum Ermitteln eines totalen Nullpunktfehlers T, und einmal bei abgeschaltetem Erreger während des Abklingens der Schwingung zum Ermitteln eines erregerunabhängigen Nullpunktfehlers I. Die Differenz zwischen dem totalen Nullpunktfehler T und dem erregerunabhängigen Nullpunktfehler I ist der erregerabhängige Nullpunktfehler E. Parallel zur Messung des Nullpunktfehlers wird ein Dämpfungswert D für die Schwingung des Messrohrs in der Biegeschwingungsmode ermittelt, beispielsweise aus dem Verhältnis von Erregerstrom und Schwingungsamplitude.

In Fig. 2b ist dargestellt, wie auf Basis der obigen Messergebnisse, im laufenden Messbetrieb ein Nullpunktfehler ermittelt werden kann. Hierbei wird davon ausgegangen, dass der erregerabhängige Anteil E des Nullpunktfehlers von der Dämpfung D abhängt und insbesondere proportional zur Dämpfung D ist. Die Proportionalitätskonstante ist eine Empfindlichkeitsfaktor S der aus der obigen Messung erhältlich ist durch Division der Differenz von totalem Nullpunktfehler T und erregerunabhängigem Nullpunktfehler durch den Dämpfungswert, also:

$$S := E/D = (T\text{-}I)/D$$

Der Empfindlichkeitsfaktor S entspricht der Steigung ansteigenden Geraden im Diagramm. Wenn, beispielsweise aufgrund geänderter Eigenschaften eines das Messrohr durchströmenden Mediums, ein neuer Dämpfungswert D' festgestellt wird, ergibt sich ein neuer totaler Nullpunktfehler als T', wie folgt: $T' := I + E' = I + S \cdot D'$.

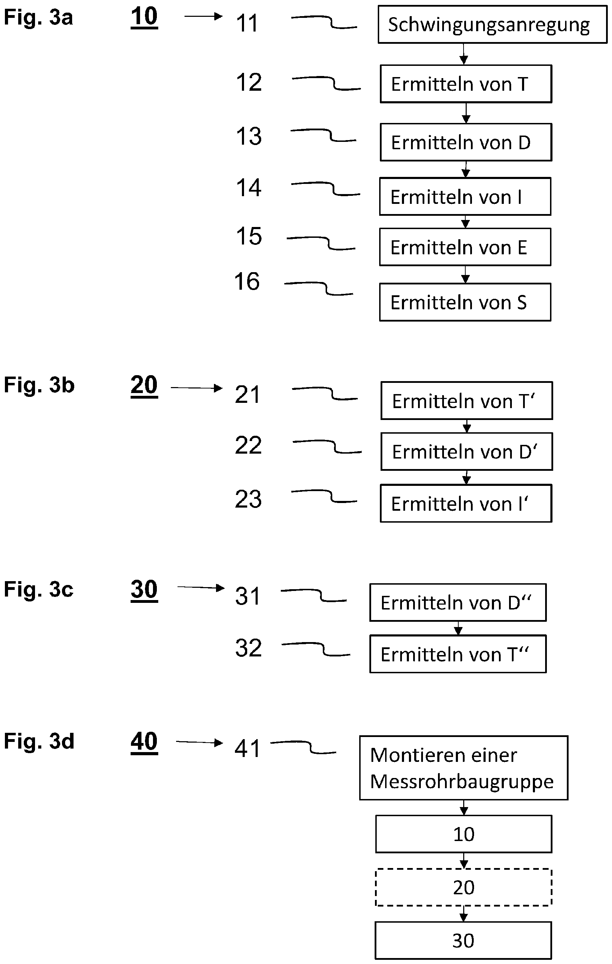

Die Vorgehensweise ist zusammengefasst im Flussdiagramm in Fig. 3a zu einem Ausführungsbeispiel 10, des erfindungsgemäßen Verfahrens, das mit dem Anregen 11 einer Biegeschwingung beginnt. Es folgt das Ermitteln 12 des totalen Nullpunktfehlers T, und das Ermitteln 13 des Dämpfungswerts D woran sich das Ermitteln 14 des erregerunabhängigen Nullpunktfehlers I bei abgeschaltetem Erreger anschließt. Auf Basis der vorgenannten Größen erfolgt das Ermitteln 15 des erregerabhängigen Beitrags E zum Nullpunktfehler und das Ermitteln 16 des Empfindlichkeitsfaktors S.

Fig. 2b. Der Empfindlichkeitsfaktor S bleibt konstant, solange sich die Symmetrieabweichungen zwischen Erreger und Messrohr nicht ändern. Dies ist bei Coriolis-Massedurchflussmessgeräten mit fest eingebauten Messrohren gewöhnlich über die gesamte Betriebsdauer der Fall. Bei modularen Geräten jedoch nur bis zum Austausch einer Messrohrbaugruppe. Der jeweils gültige Empfindlichkeitsfaktor S kann in der Mess- und Betriebsschaltung wie der erregerunabhängige Nullpunktfehler I abgespeichert und zur Berechnung des totalen Nullpunktfehlers im laufenden Messbetrieb herangezogen werden.

Wenngleich der erregerunabhängige Nullpunktfehler I stabiler ist, kann auch er sich verändern. Daher ist es empfehlenswert, den erregerunabhängigen Nullpunktfehler I gelegentlich zu aktualisieren, insbesondere dann, wenn stark veränderte Medieneigenschaften vorliegen. Die Vorgehensweise wird anhand von Fig. 2c erläutert. Bei einem Durchfluss von Null werden der totale Nullpunktfehler T" und ein Dämpfungswert D" erfasst. Damit kann ein aktualisierter erregerunabhängiger Nullpunktfehler berechnet werden gemäß:

$$I' := T' - E' = T' - S \cdot D'.$$

Der aktualisierte erregerunabhängige Nullpunktfehler I" wird dann abgespeichert und ersetzt den zuvor verwendeten Wert.

Ein zusammenfassendes Flussdiagramm für ein Ausführungsbeispiel 20 zur Aktualisierung des Erregerunabhängigen Nullpunktfehlers ist in Fig. 3b dargestellt: Nach dem Ermitteln 21 eines totalen Nullpunktfehlers T' bei einem Durchfluss von Null und dem Ermitteln 22 eines Dämpfungswerts D' kann das Ermitteln 23 des erregerunabhängigen Nullpunkfehlers auf Basis T', D' und dem bekannten Wert S erfolgen.

Unter der Voraussetzung, dass die Einflussgrößen auf den totalen Nullpunktfehler T, nämlich Empfindlichkeitsfaktor S und der erregerunabhängige Nullpunktfehler I bekannt sind, kann der totale Nullpunktfehler im laufenden Messbetrieb jederzeit auf Basis einer einfachen Dämpfungsmessung mit dem Verfahren entsprechend dem Ausführungsbeispiel 30 in Fig. 3c ermittelt werden, wobei nach dem Ermitteln 31 eines aktuellen Dämpfungswerts D" das ermitteln eines aktuelle totalen Nullpunktfehlers T" folgt gemäß folgt gemäß: : T" := I + E" = I + S · D".

Die unterschiedlichen Kennzeichnungen einer Größe X als X' und X" bedeuten lediglich, dass die Werte dieser Größe von verschiedenen Messungen stammen können.

Fig. 3d stellt schließlich ein Verfahren 40 zum Betreiben eines modularen Messgeräts dar, wie es beispielsweise n Fign 1a bis 1d. gezeigt ist. Das Verfahren beginnt mit dem Montieren einer Messrohrbaugruppe an einem Basismodul. Dann erfolgt das Ermitteln der Einflussgrößen auf den Nullpunktfehler mit dem erfindungsgemäßen Verfahren gemäß Ausführungsbeispiel 10 in Fig. 3a. Im Messbetrieb erfolgt dann das Ermitteln des totalen Nullpunktfehlers T mit dem erfindungsgemäßen Verfahren gemäß Ausführungsbeispiel 30 in Fig. 3c. Bei Bedarf kann eine Aktualisierung des erregerunabhängigen Nullpunktfehlers I erfolgen gemäß Ausführungsbeispiel 20 in Fig. 3b.

## Patentansprüche

1. Verfahren (10) zum Bestimmen von Einflussgrößen auf einen totalen Nullpunktfehler eines Coriolis-Massedurchflussmessgerätes mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei das Verfahren umfasst:

Anregen (11) einer Schwingung einer Biegeschwingungsmode des Messrohrs;
Messen (12) eines ersten totalen Nullpunktfehlers mit einem ersten Medium im Messrohr bei einem Durchfluss von Null;
Ermitteln (13) eines ersten Dämpfungswerts der Schwingung der Biegeschwingungsmode mit dem ersten Medium im Messrohr; und
Ermitteln (16) eines Empfindlichkeitsfaktors für die Biegeschwingungsmode;
**dadurch gekennzeichnet, dass** das Verfahren umfasst:

Messen (14) eines erregerunabhängigen Nullpunktfehlers bei einer abklingenden Schwingung der Biegeschwingungsmode mit dem ersten Medium im Messrohr bei einem Durchfluss von Null; und
Ermitteln (15) eines ersten erregerabhängigen Beitrags zum ersten totalen Nullpunktfehler anhand des ersten totalen Nullpunktfehlers und anhand des erregerunabhängigen Nullpunktfehlers; wobei
das Ermitteln (16) des Empfindlichkeitsfaktors für die Biegeschwingungsmode, anhand des ersten erregerabhängigen Beitrags zum totalen Nullpunktfehler und anhand des ersten Dämpfungswerts erfolgt.

2. Verfahren (10) nach Anspruch 1, wobei das Ermitteln (13) des ersten Dämpfungswerts das Bilden eines Quotienten aus einem Erregerstrom zum Anregen der Schwingung und der damit erzielten Schwingungsamplitude umfasst.

3. Verfahren (10) nach Anspruch 1 oder 2, wobei das Ermitteln des ersten Dämpfungswerts (13) das Ermitteln einer Zeitkonstanten der abklingenden Schwingung der Biegeschwingungsmode umfasst.

4. Verfahren (10) nach einem der vorhergehenden Ansprüche, wobei das Ermitteln (15) des ersten erregerabhängigen Beitrags zum ersten totalen Nullpunktfehler das Bilden einer Differenz zwischen dem ersten totalen Nullpunktfehler und dem erregerunabhängigen Nullpunktfehler umfasst.

5. Verfahren (10) nach einem der vorhergehenden Ansprüche, wobei das Ermitteln des Empfindlichkeitsfaktors eine Division des ersten erregerabhängigen Beitrags zum ersten totalen Nullpunktfehler durch den ersten Dämpfungswert umfasst.

6. Verfahren (10) nach einem der vorhergehenden Ansprüche, weiterhin umfassend das Ermitteln eines aktualisierten erregerunabhängigen Nullpunktfehlers, umfassend:

   Anregen einer Schwingung einer Biegeschwingungsmode mit einem zweiten Medium im Messrohr;
   Messen eines zweiten totalen Nullpunktfehlers mit dem zweiten Medium im Messrohr bei einem Durchfluss von Null;
   Ermitteln eines zweiten Dämpfungswerts mit dem zweiten Medium im Messrohr
   Ermitteln des aktualisierten erregerunabhängigen Nullpunktfehlers auf Basis des zweiten totalen Nullpunktfehlers, des zweiten Dämpfungswerts und des Empfindlichkeitsfaktors.

7. Verfahren nach einem der vorhergehenden Ansprüche, weiterhin umfassend, das Bestimmen eines dritten totalen Nullpunktfehlers des Coriolis Massedurchflussmessgerätes, wobei das Verfahren umfasst:

   Ermitteln eines dritten Dämpfungswerts für eine Schwingung der Biegeschwingungsmode mit einem dritten Medium im Messrohr; und Berechnen des dritten totalen Nullpunktfehlers auf Basis des dritten Dämpfungswerts und des Empfindlichkeitsfaktors für die Biegeschwingungsmode und des erregerunabhängigen Nullpunktfehlers.

8. Verfahren nach Anspruch 7, wobei der dritte totale Nullpunktfehler die Summe des erregerunabhängigen Nullpunktfehlers und eines dritten erregerabhängigen Beitrags zum totalen Nullpunktfehler umfasst.

9. Verfahren nach Anspruch 8, wobei der dritte erregerabhängige Beitrag zum totalen Nullpunktfehler ein Produkt des Empfindlichkeitsfaktors und des dritten Dämpfungswerts umfasst.

10. Verfahren zum Betreiben eines modularen Coriolis-Massedurchflussmessgeräts mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei das Coriolis-Massedurchflussmessgerät ein Basismodul und ein austauschbares Messrohrmodul aufweist, wobei das Messrohrmodul das Messrohr und jeweils eine erste Komponente des Erregers und der beiden Schwingungssensoren umfasst, wobei das Basismodul die Mess- und Betriebsschaltung, ein Gehäuse mit einer Aufnahme für das Messrohrmodul und jeweils eine zweite Komponente des Erregers und der beiden Schwingungssensoren umfasst, wobei das Verfahren umfasst:
Verbinden des Messrohrmoduls mit dem Basismodul, so dass jeweils die ersten und zweiten Komponenten des Erregers und der beiden Sensoren zueinander in einer Wirkposition stehen; und Ermitteln eines Empfindlichkeitsfaktors und eines erregerunabhängigen Nullpunktfehlers mit einem Verfahren nach einem der Ansprüche 1 bis 6.

11. Verfahren nach Anspruch 10, weiterhin umfassend:
Bestimmen eines Nullpunktfehlers mittels des Verfahrens nach einem der Ansprüche 7 bis 9.

12. Coriolis-Massedurchflussmessgerät mit: mindestens einem schwingfähig gelagerten Messrohr, zum Führen eines Mediums; einem Erreger zum Anregen einer Biegeschwingungsmode, mindestens zwei Schwingungssensoren zum Erfassen von Schwingungen des Messrohrs; und mindestens einer Mess- und Betriebsschaltung zum Treiben des Erregers, zum Erfassen von Sensorsignalen der Schwingungssensoren und zum Ermitteln eines Massedurchflussmesswerts in Abhängigkeit von den Sensorsignalen, wobei die Mess- und Betriebsschaltung zur Durchführung mindestens eines der Verfahren nach einem der vorhergehenden Ansprüche eingerichtet ist.

## Claims

1. Method (10) for determining influencing variables on a total zero-point error of a Coriolis mass-flow measuring device with: at least one vibratably mounted measuring tube for guiding a medium; an exciter for exciting a bending vibration mode, at least two vibration sensors for detecting vibrations of the measuring tube; and at least one measuring and operating circuit for driving the exciter, for detecting sensor signals of the vibration sensors and for determining a mass flow measurement value in dependence on the sensor signals, the method comprising:

   Excitation (11) of a vibration of a bending vibration mode of the measuring tube;
   measuring (12) a first total zero-point-error with a first medium in the measuring pipe at a flow rate of zero;
determining (13) a first damping value of the vibration of the bending vibration mode with the first medium in the measuring tube; and
determining (16) of a sensitivity factor for the bending vibration mode;
**characterized in that** the method comprises measuring (14) an exciter-independent zero-point-error in a decaying oscillation of the bending vibration mode with the first medium in the measuring tube at a flow rate of zero; and
determining (15) a first exciter-dependent contribution to the first total zero-point-error on the basis of the first total zero-point-error and on the basis of the exciter independent zero-point-error; wherein

the sensitivity factor for the bending vibration mode is determined (16) on the basis of the first exciter-dependent contribution to the total zero-point-error and the first damping value.

2. The method (10) according to claim 1, wherein determining (13) the first damping value comprises forming a quotient of an excitation current for exciting the oscillation and the oscillation amplitude obtained thereby.

3. The method (10) according to claim 1 or 2, wherein determining the first damping value (13) comprises determining a time constant of the decaying vibration of the bending vibration mode.

4. The method (10) according to any one of the preceding claims, wherein determining (15) the first exciter-dependent contribution to the first total zero-point-error comprises forming a difference between the first total zero-point-error and the exciter-independent zero-point-error.

5. The method (10) according to one of the preceding claims, wherein determining the sensitivity factor comprises a division of the first excitation-dependent contribution to the first total zero-point-error by the first attenuation value.

6. The method (10) according to any one of the preceding claims, further comprising determining an updated exciter-independent zero-point-error:

excitating a vibration of a bending vibration mode with a second medium in the measuring tube;
measuring a second total zero-point-error with the second medium in the measuring tube at a flow rate of zero;
determining a second attenuation value with the second medium in the measuring tube

determining the updated exciter-independent zero-point-error based on the second total zero-point-error, the second attenuation value and the sensitivity factor.

7. A method according to any one of the preceding claims, further comprising determining a third total zero error of the Coriolis mass flow meter, wherein the method comprises:
Determining a third damping value for an oscillation of the bending vibration mode with a third medium in the measuring tube; and
calculating the third total zero-point-error based on the third damping value and the sensitivity factor for the bending vibration mode and the excitation-independent zero-point-error.

8. The method according to claim 7, wherein the third total zero-point-error comprises the sum of the exciter-independent zero-point-error and a third exciter-dependent contribution to the total zero-point-error.

9. The method according to claim 8, wherein the third exciter-dependent contribution to the total zero-point-error comprises a product of the sensitivity factor and the third attenuation value.

10. Method for operating a modular Coriolis mass flow measuring device with: at least one vibrating measuring tube for guiding a medium; an exciter for exciting a bending vibration mode, at least two vibration sensors for detecting vibrations of the measuring tube; and at least one measuring and operating circuit for driving the exciter, for detecting sensor signals from the vibration sensors and for determining a mass flow rate measurement value as a function of the sensor signals, wherein the Coriolis mass flow meter has a base module and an exchangeable measuring tube module, the measuring tube module comprising the measuring tube and, in each case, a first component of the exciter and of the two vibration sensors, the base module comprising the measuring and operating circuit, a housing with a receptacle for the measuring tube module and, in each case, a second component of the exciter and of the two vibration sensors, the method comprising:
connecting the measuring tube module to the base module so that the first and second components of the exciter and the two sensors are in an effective position relative to each other; and determining a sensitivity factor and an exciter-independent zero-point-error by a method according to one of claims 1 to 6.

11. The method of claim 10, further comprising:
determining a zero-point-error by means of the method according to any one of claims 7 to 9.

**12.** Coriolis mass flow meter with: at least one vibratably mounted measuring tube- for guiding a medium; an exciter for exciting a bending vibration mode, at least two vibration sensors for detecting vibrations of the measuring tube; and at least one measuring and operating circuit for driving the exciter, for detecting sensor signals of the vibration sensors and for determining a mass flow measurement value as a function of the sensor signals, the measuring and operating circuit being set up for carrying out at least one of the methods according to one of the preceding claims.

**Revendications**

**1.** Méthode (10) pour déterminer des grandeurs d'influence sur une erreur totale de zéro d'un débitmètre massique selon le principe de Coriolis comprenant : au moins un tube de mesure monté de manière à pouvoir vibrer, pour guider un fluide ; un excitateur pour exciter un mode de vibration de flexion, au moins deux capteurs de vibrations pour détecter les vibrations du tube de mesure ; et au moins un circuit de mesure et de fonctionnement pour commander l'excitateur, pour détecter des signaux de capteur des capteurs de vibration et pour déterminer une valeur de mesure de débit massique en fonction des signaux de capteur, le procédé le comprenant :

l'excitation (11) d'une oscillation d'un mode d'oscillation de flexion du tube de mesure ; mesure (12) d'une première erreur totale zéro avec un premier fluide dans le tube de mesure à un débit nul ; déterminer (13) une première valeur d'amortissement de l'oscillation du mode de flexion avec le premier fluide dans le tube de mesure ; et déterminer (16) un facteur de sensibilité pour le mode de vibration de flexion ; **caractérisé en ce que** la procédé comprend mesure (14) une erreur de zéro indépendante de l'excitation lors d'une oscillation décroissante du mode de vibration de flexion avec le premier fluide dans le tube de mesure à un débit nul ; et déterminer (15) une première contribution dépendante de l'excitateur à la première erreur totale de zéro à partir de la première erreur totale de zéro et à partir de l'erreur de zéro indépendante de l'excitateur ; dans lequel

la détermination (16) du facteur de sensibilité pour le mode de vibration de flexion s'effectue à L'aide de la première contribution dépendant de l'excitateur à L'erreur totale de zéro et à l'aide de la première valeur d'amortissement.

**2.** Procédé (10) selon la revendication 1, dans lequel la détermination (13) de la première valeur d'amortissement consiste à former un quotient entre un courant d'excitation de l'oscillation et l'amplitude de l'oscillation ainsi obtenue.

**3.** La méthode (10) selon la revendication 1 ou 2, dans laquelle la détermination de la première La valeur d'amortissement (13) comprend la détermination d'une constante de temps de la vibration décroissante du mode de vibration de flexion.

**4.** La méthode (10) selon l'une quelconque des revendications précédentes, dans laquelle la détermination (15) de la première contribution dépendante de l'excitateur à la première erreur totale au point zéro comprend la formation d'une différence entre la première erreur totale au point zéro et l'erreur au point zéro indépendante de l'excitateur.

**5.** La méthode (10) selon l'une des revendications précédentes, dans laquelle

la détermination du facteur de sensibilité comprend une division de la première contribution dépendant de l'excitation à la première erreur totale au point zéro par la première valeur d'atténuation. contribution dépendant de l'excitation à la première erreur totale au point zéro par la première valeur d'atténuation.

**6.** La méthode (10) selon l'une quelconque des revendications précédentes, en outre comprenant la détermination d'une erreur zéro indépendante de l'excitateur mise à jour :

exciter une vibration d'un mode de vibration de flexion avec un second fluide dans le tube de mesure ; mesurer une seconde erreur totale au point zéro avec le second fluide dans le tube de mesure à un débit nul ; la détermination d'une deuxième valeur d'atténuation avec le deuxième milieu dans la tube de mesure déterminer la mise à jour de l'erreur au point zéro indépendante de l'excitateur sur la base de la seconde erreur totale au point zéro, de la seconde valeur d'atténuation et du facteur de sensibilité.

**7.** Procédé selon l'une quelconque des revendications précédentes, comprenant en outre la détermination d'une troisième erreur totale de zéro du débitmètre massique de Coriolis, dans lequel le procédé comprend :

Détermination d'une troisième valeur d'amortissement pour une oscillation du mode de vibration de flexion avec un troisième fluide dans le tube de mesure ; et

calculer la troisième erreur totale au point zéro sur la base du troisième amortissement et le facteur de sensibilité pour le mode de vibration de flexion et l'erreur au point zéro indépendante de l'excitation.

8. Méthode selon la revendication 7, dans laquelle la troisième erreur totale du point zéro comprend la somme de l'erreur du point zéro indépendante de l'excitateur et d'une troisième contribution de l'excitateur à l'erreur totale du point zéro.

9. La méthode selon la revendication 8, dans laquelle le troisième facteur dépendant de l'excitateur la contribution à l'erreur totale au point zéro comprend le produit du facteur de sensibilité et de la troisième valeur d'atténuation.

10. Méthode d'exploitation d'un système modulaire de mesure du débit massique par effet Coriolis

dispositif comprenant : au moins un tube de mesure vibrant pour guider un fluide ; un excitateur pour exciter un mode de vibration de flexion, au moins deux capteurs de vibration pour détecter les vibrations du tube de mesure ; et au moins un circuit de mesure et de fonctionnement pour piloter l'excitateur, pour détecter les signaux des capteurs de vibration et pour déterminer une valeur de mesure du débit massique en fonction des signaux des capteurs,

dans lequel le débitmètre massique à effet Coriolis comporte un module de base et un module de tube de mesure interchangeable, le module de tube de mesure comprenant le tube de mesure et, dans chaque cas, un premier composant de l'excitateur et des deux capteurs de vibrations, le module de base comprenant le circuit de mesure et de fonctionnement, un boîtier avec une

un réceptacle pour le module du tube de mesure et, dans chaque cas, un deuxième composant de l'excitateur et des deux capteurs de vibrations, la méthode comprenant :

Connecter le module du tube de mesure au module de base de manière à ce que le premier et le second composant de l'excitateur et les deux capteurs se trouvent dans une zone de contact effective.

position l'un par rapport à l'autre ; et déterminer un facteur de sensibilité et une erreur au point zéro indépendante de l'excitateur par un procédé selon l'une des revendications 1 à 6. par un procédé selon l'une des revendications 1 à 6.

11. La méthode de la revendication 10, comprenant en outre la détermination d'une erreur de point zéro au moyen de la méthode selon l'une quelconque des méthodes suivantes des revendications 7 à 9.

12. Débitmètre massique à effet Coriolis comprenant : au moins un tube de mesure monté vibratoirement pour le guidage d'un fluide ; un excitateur pour l'excitation d'un mode de vibration de flexion, au moins deux capteurs de vibration pour la détection des vibrations du tube de mesure ; un excitateur pour l'excitation d'un mode de vibration de flexion.

tube de mesure ; et au moins un circuit de mesure et de fonctionnement pour piloter l'excitateur, pour détecter les signaux des capteurs de vibrations et pour déterminer une valeur de mesure du débit massique en fonction des signaux des capteurs, le circuit de mesure et de fonctionnement étant configuré pour mettre en oeuvre au moins l'une des méthodes selon l'une des revendications précédentes.

Fig. 1a

Fig. 1b

Fig. 1c

**Fig. 2a**

Nullpunktfehler

t

**Fig. 2b**

Nullpunktfehler

S

D    D'

Dämpfung

**Fig. 2c**

Nullpunktfehler

S

D"

Dämpfung

**Fig. 3a**　　__10__ → 11 ⌇　 Schwingungsanregung

12 ⌇　 Ermitteln von T

13 ⌇　 Ermitteln von D

14 ⌇　 Ermitteln von I

15 ⌇　 Ermitteln von E

16 ⌇　 Ermitteln von S

**Fig. 3b**　　__20__ → 21 ⌇　 Ermitteln von T'

22 ⌇　 Ermitteln von D'

23 ⌇　 Ermitteln von I'

**Fig. 3c**　　__30__ → 31 ⌇　 Ermitteln von D''

32 ⌇　 Ermitteln von T''

**Fig. 3d**　　__40__ → 41 ⌇　 Montieren einer Messrohrbaugruppe

10

20

30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9831990 A1
- US 20050119845 A1
- DE 102017125273 A1
- US 5796012 A1
- EP 2019295 A1